# EUROPÄISCHE PATENTSCHRIFT

(11) **EP 3 840 926 B1**
(45) Veröffentlichungstag und Bekanntmachung des Hinweises auf die Patenterteilung: **13.12.2023**
(21) Anmeldenummer: 19762314.3
(22) Anmeldetag: 22.08.2019
(51) Int. Cl.: B29C 48/691, B29C 48/25, B29C 48/255, B29B 7/58

(54) **FILTRIERVORRICHTUNG FÜR HOCHVISKOSE MEDIEN**
FILTERING DEVICE FOR HIGHLY VISCOUS MEDIA
DISPOSITIF FILTRANT DESTINÉ À DES MILIEUX À VISCOSITÉ ÉLEVÉE

(30) Priorität: 22.08.2018 DE 102018120445
(43) Veröffentlichungstag der Anmeldung: 30.06.2021
(73) Patentinhaber: Gneuss GmbH, 32549 Bad Oeynhausen (DE)
(72) Erfinder: GNEUSS, Daniel, Charlotte, NC 28277 (US); GNEUSS, Detlef, 6919 Carabietta (CH); GNEUSS, Stephan, 32547 Bad Oeynhausen (DE)
(74) Vertreter: Tarvenkorn, Oliver
(86) Internationale Anmeldenummer: PCT/DE2019/100756
(87) Internationale Veröffentlichungsnummer: WO 2020/038533

(56) Entgegenhaltungen:
- EP-A1- 1 369 219
- WO-A1-2018/019336
- CN-U- 203 680 783
- JP-A- 2012 239 999

## Beschreibung

Die Erfindung betrifft eine Filtriervorrichtung für hochviskose Medien mit den Merkmalen des Oberbegriffs des Anspruchs 1.

Um Schmutzpartikel aus hochviskosen Medien wie insbesondere aus Kunststoffschmelze abzuscheiden, sind verschiedene Bauformen wie Siebbolzenwechsler oder Siebradwechsler aus zum Beispiel WO 2018/019336 A1, JP 2012 239999 A, EP 1 369 219 A1 und CN 203 680 783 U bekannt, die als gemeinsames Merkmal haben, dass sie auf einem beweglichen Trägerelement mehrere Siebkavitäten zur Verfügung stellen, in denen Filtermedien angebracht werden. Ist eine Siebstelle verschmutzt, wird die betroffene Siebstelle aus dem Fließkanal heraus und eine andere Siebstelle dort hinein bewegt. Bei Bauformen, die einen kontinuierlichen Betrieb ermöglichen, ist dadurch sichergestellt, dass während des Siebwechsels an einer der Siebkavitäten die Flüssigkeit zumindest über eine weitere Siebkavität weiterfließen kann. Die verschmutzte Siebstelle wird anschließend in eine Rückspülposition gebracht und durch Rückspülung gereinigt. Reicht die Reinigung per Rückspülung nicht, wird die Siebkavität bis in eine Wartungsposition außerhalb des Gehäuses bewegt oder ist dort durch eine Gehäuseöffnung zugänglich, so dass das Siebelement ausgewechselt werden kann.

Die kontinuierliche Betriebsweise ermöglicht einen dauerhaften, störungsarmen Filtrierbetrieb, bringt jedoch in einigen Anwendungsfällen folgende Nachteile mit sich:
- Problematisch ist bei allen Bauformen, dass viele Kunststoffschmelzen chemisch und/oder thermisch geschädigt werden können, wenn die Verweilzeit, in der die Kunststoffschmelze außerhalb des durchströmten Fließkanals in den Siebkavitäten unter Temperatureinfluss stillsteht, zu lang ist.
- Die Filterfläche ist bei einer Filtriervorrichtung vom Siebbolzenwechslertyp nicht beliebig vergrößerbar. Um ein Siebelement im Einsatz zu halten, ein weiteres auf Vorrat bereit zu stellen und außerdem noch wenigstens eine Rückspülposition und/oder eine Wartungsöffnung zum Wechsel der Siebelemente bereit zu stellen, sind in der Regel wenigstens vier Siebkavitäten notwendig. Eine wesentliche Flächenvergrößerung in den Siebkavitäten würde zu unverhältnismäßig großen Siebbolzendurchmessern und Gehäuselängen führen. Eine Flächenvergrößerung durch Einsatz von Kerzenfiltern und ähnlichem ist wegen des begrenzten Bauraums im Bolzen ebenfalls nur bedingt möglich.
- Beim Siebradtyp, der z. B. in DE 10 2016 113 979 B3 beschrieben ist, liegt ebenfalls eine Limitierung der auf dem Siebrad für die Filtrierung nutzbaren Flächen vor, weil jede Siebkavität einzeln gegenüber dem Gehäuse abgedichtet sein muss. Zwar können mehrere Siebstellen gleichzeitig durchströmt werden, wie in der DE 10 2010 036 810 A1 offenbart, jedoch sind im Filtrierbetrieb stets wenigstens zwei weitere Siebstellen innerhalb des Gehäuses positioniert, nämlich wenigstens eine vor und eine nach den durchflossenen Siebkavitäten. Die Überdeckung mit dem Gehäuse um die Breite wenigstens je einer Siebkavität zu beiden Seiten ist erforderlich, um zu verhindern, dass beim Weiterdrehen des Siebrads Flüssigkeit aus dem Gehäuse ausfließt. Diese quasi in einer Sperrposition befindlichen Siebkavitäten sind besonders für das genannte Problem der Degradation bei unter Wärmeeinfluss stillstehenden Kunststoffschmelzen anfällig. Davon wiederum ist die Position auf dem Siebrad, die jeweils in Drehrichtung unmittelbar hinter den im Filtrierbetrieb stehenden Positionen liegt, die am meisten gefährdete. Denn die darin feststehende Schmelze gelangt beim nächsten Vorschub direkt in den Produktionsstrom. Falls auf der Reinseite des Siebelements Abbauprodukte während der Wartezeit entstehen, verunreinigen diese direkt das Produkt.

Um dennoch mit wesentlich größeren Filterflächen arbeiten zu können, sind Großflächenfilter bekannt, beispielsweise aus der DE 10 2005 061 770 A1, die aber für die Wartung komplett stillgelegt werden müssen.

Die Aufgabe der Erfindung besteht somit darin, eine Filtriervorrichtung für hochviskose Medien für hochviskose Medien der eingangs genannten Art so zu verbessern, dass die wirksame Filterfläche erhöht wird, wobei aber zugleich das Problem der thermischen Zersetzung bestimmter Kunststoffschmelzen berücksichtigt wird.

Diese Aufgabe wird durch eine Filtriervorrichtung für hochviskose Medien mit den Merkmalen des Anspruchs 1 gelöst.

Die erfindungsgemäße Lösung setzt also auf einer Filtriervorrichtung vom Siebradtyp auf. Erfindungswesentlich sind folgende Merkmale:
- Nach wie vor ist das Siebrad bevorzugt durch Winkelteilung in mehrere Kreisringsegmente geteilt, von denen die meisten durchbrochen sind und Siebkavitäten ausbilden. Die Siebkavität selbst kann eine Kreisringsegmentform haben, um den Platz optimal zu nutzen, kann aber auch rund sein. Der Begriff "Segment" kennzeichnet also zunächst nur eine von mehreren Positionen auf dem Siebrad.
- Mehrere nebeneinander liegende Segmente, die Siebkavitäten haben, bilden eine Filtergruppe, die als Ganzes durchströmbar ist, so dass zur Filtrierung eine große Fläche zur Verfügung steht.
- Obwohl die Siebkavitäten bei der Filtrierung als Einheit aus mehreren Kreisringsegmenten genutzt werden, sind sie dennoch alle mit einem eigenen umfänglichen Dichtsteg versehen, über den sie gegen das Gehäuse einzeln abdichtbar sind. Müssen die Siebkavitäten im Siebrad gereinigt werden, kann das Siebrad im laufenden Betrieb gedreht werden, ohne dass Schmelze aus dem Gehäuse austritt. Die Fläche der Filtergruppe ist dann vorübergehend reduziert, aber die Filtrierung kann weiterlaufen. Die Siebkavitäten sind nacheinander einzeln an einer Wartungsöffnung zugänglich, bevor sie wieder ins Gehäuse hineingedreht werden, damit die gesamte Filtergruppe wieder durchströmt werden kann.
- In den Sperrpositionen, die zugleich unbenutzte Wartepositionen sind, die jeweils vor und hinter der Filtergruppe liegen, sind überhaupt keine Siebkavitäten vorgesehen. Zwar ist damit ein geringer Flächenanteil auf dem Siebrad nicht für die Filtrierung nutzbar. Es gibt dadurch aber keine im Gehäuse über längere Zeit unter Wärmeeinfluss feststehenden Hohlräume, in denen Material abbauen kann.

Der Begriff "Dichtsteg" kann sich konkret auf einen erhabenen Bereich mit konstanter Breite beziehen, der eine Siebkavität umgibt. Es kann sich dabei aber auch um einen imaginären Streifen mit einer für die Abdichtwirkung erforderlichen Mindestbreite innerhalb eines sehr viel größeren Flächenbereichs handeln. Falls beispielsweise eine runde Siebkavität in einem Segment vorgesehen ist, dann steht neben der runden Kavität eine große Dichtfläche zur Verfügung. Davon ist aber nur irgendein endloser Ring mit einer u.a von der Viskosität des Mediums und dem Druck abhängigen Mindestbreite erforderlich, um die Abdichtung der Siebkavität gegenüber dem Gehäuse zu bewirken. Der Dichtsteg kann eine solche Siebkavität direkt umgeben, so dass er auch rund ist, oder er kann auch irgendwo in der nicht für eine Kavität durchbrochenen Seitenfläche des Siebrads liegen. Es kann auch die ganze verbleibende, nicht durchbrochene Fläche des Segments als Dichtsteg dienen. Wie der Dichtsteg verläuft und wie breit er ist, ist somit nicht wesentlich. Wesentlich ist nur, dass die erforderliche Mindestbreite des Dichtstegs vollständig innerhalb der zugewiesenen Segmentfläche liegt, wobei noch möglich ist, dass benachbarte Segmente genau im Grenzbereich einen gemeinsamen Dichtsteg aufweisen, um die zur Filtrierung zur Verfügung stehende Fläche zu maximieren.

In einer ersten bevorzugten Ausführungsform der Erfindung hat das Siebrad nur eine einzige Filtergruppe, die mehr als die Hälfte an Kreisringsegmenten aktiv zur Filterung nutzt. Es verbleiben zwei Kreisringsegmente als Sperrsegmente, die im normalen Filtrierbetrieb innerhalb des Gehäuses liegen, und ein drittes Kreisringsegment ohne Siebkavität dazwischen, das eine Wartungsöffnung außerhalb des Gehäuses besetzt. Es gibt also zusammengefasst ein großes Segment auf dem Siebrad, das die aus mehreren, einzeln abdichtbaren Siebkavitäten gebildete Filtergruppe darstellt, und ein kleineres Segment ohne Siebkavitäten.

Die Anzahl der Winkeluntereilungen und der so entstehenden Kreisringsegmente sollte mindestens 6, vorzugsweise aber zwischen 8 und 12 betragen. Wie dargestellt, sind stets 3 Positionen nicht für den Filtrierbetrieb nutzbar, so dass eine Mindestzahl von n=6 Segmenten immerhin noch die Hälfte der Fläche für den Filtrierbetrieb nutzbar macht. Bei n=8 beträgt das Verhältnis von nutzbarer zu nicht nutzbarer Fläche immerhin 5:3, bei n=12 sogar 9:3. Je mehr Segmente es gibt, desto kleiner ist auch die Flächenreduzierung, wenn das Siebrad zwecks Wartung bereits gedreht ist, aber der Filtrierbetrieb über eine reduzierte Filtrierfläche fortgeführt wird.

Zwar verbessert sich theoretisch das genannte Verhältnis mit zunehmender Anzahl an Kreisringsegmenten immer weiter, weil die Anzahl nicht nutzbarer Positionen konstant bei minimal drei verbleibt. Allerdings bleibt dabei unberücksichtigt, dass der Filtrierbereich nach der Erfindung aus Einzelsegmenten gebildet wird, die jeweils für sich abdichtbar sein müssen, so dass dazwischen stets die Breite eines Dichtstegs zu berücksichtigen ist, die wiederum unabhängig von der nutzbaren Filterfläche eine konstante Mindestbreite benötigt. Je größer die Anzahl an Kavitäten also ist, desto mehr Fläche bleibt innerhalb des Filterbereichs als Dichtfläche nicht nutzbar. Aufgrund dieser Überlegungen ist eine Unterteilung des Siebrads in wesentlich mehr als 12 Kavitäten nicht sinnvoll.

Da die Teilung des Siebrads also bevorzugt in 8 bis 12 Kreisringsegmente erfolgt und davon minimal 3 Segmente - zwei als Sperrsegmente und eines für die Wartungsöffnung - benötigt werden, die nicht für die Filtrierung nutzbar sind, umfasst der Filterbereich folglich mindestens 5 nebeneinander liegende Segmente. Dadurch gibt es in allen Siebradstellungen stets wenigstens zwei durchströmbare Siebkavitäten, auch während das Sperrsegment durch den Filterbereich hindurch läuft.

Bei einer zweiten bevorzugten Ausführungsform sind zwei gleich große Filtergruppen vorgesehen, zwischen den zu beiden Seiten jeweils ein einzelnes Sperrsegment ausgebildet ist. Dazu passend ist die Gehäuseöffnung im Wartungsbereich so groß, dass eine komplette Filtergruppe außerhalb des Gehäuses angeordnet sein kann, um dort die Siebelemente in den Siebkavitäten zu tauschen oder zu reinigen. Das Gehäuse besitzt somit an der Seite der Wartungsöffnung eine Diaboloform. Es gibt folglich auf dem Siebrad zwei Filtergruppen, die abwechselnd in den Filtrierbetrieb und in die Wartungsposition gebracht werden. Die Unterteilung der relativ großen Filtergruppen in einzeln abdichtbare Siebkavitäten hat den Vorteil, dass in keiner Winkelstellung des Siebrads Schmelze aus dem Gehäuse austreten kann. Stets ist die vom Gehäuse überdeckte Fläche in den Sperrbereichen mindestens so groß wie ein Kreisringsegment, oder sogar größer. Durch die Unterteilung in Einzelsiebkavitäten, die sich als solche im Filtrierbetrieb im Bereich des Zu- und Ablaufkanals nicht bemerkbar macht, sondern nur beim Weiterdrehen durch die Sperrbereiche hindurch, ist ein quasi-kontinuierlicher Betrieb möglich, denn in keiner Stellung des Siebrads ist der Fließkanal völlig versperrt.

Somit ist es ein wesentliches Prinzip der Erfindung gemäß der zweiten Ausführungsform, dass in einer bestimmten Arbeitsstellung des Siebrads alle Siebkavitäten der einen Filtergruppe gleichzeitig durchströmt werden und die der anderen Filtergruppe sich im Wartungsbereich befindet. Der Wechsel dazwischen erfolgt ohne vollständige Unterbrechung des Fluidstroms.

Insofern bei der Beschreibung der vorliegenden Erfindung die Form eines Kreisringsegments angesprochen wird, bezieht sich dies generell auf die Unterteilung der Siebrad-Ringschreibe mit zentraler Nabe in eine Vielzahl von Abschnitten, ohne dass es auf eine exakte Kreissegmentform ankäme. Auch Trapezformen oder sonstige Näherungen sind zur Einteilung in die erfindungsgemäß vorgesehenen Abschnitte auf dem Siebrad geeignet.

Bevorzugt verlaufen die imaginären oder auch - in Form von Dichtstegkanten usw. - sichtbaren Trennlinien zwischen den Segmenten als radiale Strahlen. Möglich ist aber auch, die tatsächliche Trennlinie versetzt zu einem Radius anzuordnen und/oder die Kreisringsegmente verschieden groß auszubilden. Beispielsweise kann es zur Erhöhung der Dichtwirkung vorteilhaft sein, die Sperrsegmente größer als die mit Filterelementen bestückten Abschnitte, die sog. Siebkavitäten, auszubilden.

Schließlich können die für die Filtrierung nutzbaren Öffnungen im Siebrad, die mit Sieben und anderen Filterelementen versehen werden, ebenfalls nicht nur kreissegmentförmig sein, sondern auch rund. Durch die Kreissegmentform wird die zur Verfügung stehende Fläche am besten ausgenutzt, jedoch sind auch runde Ausnehmungen und entsprechende Einsätze wie Kerzenfilter oder gestapelte Filterscheiben denkbar. Wesentlich ist, dass es unabhängig von der konkreten Form der Sieböffnungen eine Kontur- und Dichtungslinie an den zum Siebrad gewandten Innenseiten der Gehäuseteile gibt, die mehrere Siebkavitäten einschließen und somit abdichten kann. Innerhalb dieser Konturlinie darf die Gehäusefläche nicht durch Stege oder dergleichen unterbrochen sein, was vorzugsweise dadurch erreicht wird, dass ggf. vorhandene Stege z. B. durch Überströmkanäle durchbrochen sind oder dass gleich eine vollflächige Vertiefung an den Innenflächen der Gehäusehälften ausgebildet wird.

Die Erfindung wird nachfolgend mit Bezug auf die in den Zeichnungen dargestellten Ausführungsbeispiele näher erläutert. Die Figuren zeigen im Einzelnen:
- Fig. 1: eine perspektivische Ansicht einer Filtriervorrichtung gemäß einer ersten Ausführungsform;
- Fig. 2: ein Siebrad zur Filtriervorrichtung gemäß der ersten Ausführungsform, in Draufsicht;
- Fig. 3: eine Vorderansicht auf die Filtriervorrichtung mit einer ersten Stellung des Siebrads;
- Fig. 4: eine Vorderansicht auf die Filtriervorrichtung mit einer zweiten Stellung des Siebrads;
- Fig. 5: eine perspektivische Ansicht einer Filtriervorrichtung gemäß einer zweiten Ausführungsform;
- Fig. 6: ein Siebrad zur Filtriervorrichtung gemäß der zweiten Ausführungsform, in Draufsicht;
- Fig. 7: eine Vorderansicht auf die Filtriervorrichtung nach Fig. 5 mit einer ersten Stellung des Siebrads; und
- Fig. 8: eine Vorderansicht auf die Filtriervorrichtung nach Fig. 5 mit einer zweiten Stellung des Siebrads.

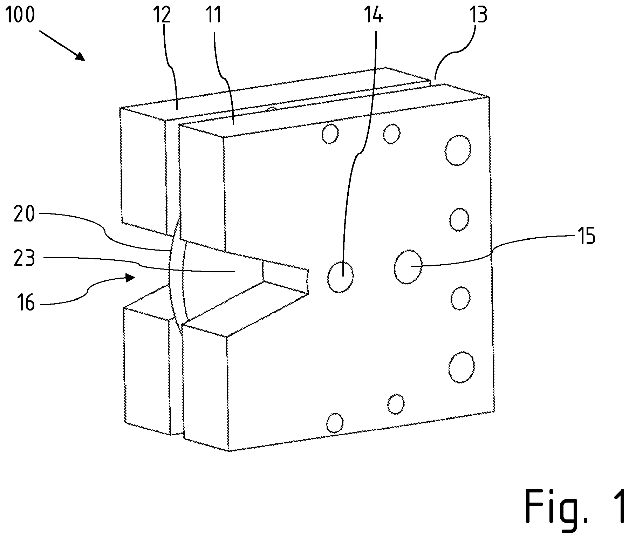

Figur 1 zeigt eine Filtriervorrichtung 100 gemäß einer ersten Ausführungsform der Erfindung in perspektivischer Ansicht. Der Grundaufbau entspricht dem bekannten Typ einer Siebradwechsler-Filtriervorrichtung und umfasst als wesentliche Komponenten:
- Ein Gehäuse 10 mit einem plattenförmigen vorderen Gehäuseelement 11, durch das ein Zulaufkanal 15 führt, und mit einem ebenfalls plattenförmigen, hinteren Gehäuseelement 12, durch welches ein Ablaufkanal führt.
- Ein Siebrad 20, das in einem Spalt 13 zwischen den planparallel angeordneten Gehäuseelementen 11, 12 angeordnet ist und um eine Drehachse 14 drehbar ist.

Charakteristisch für die Erfindung ist bei der Filtriervorrichtung 100 gemäß Figur 1 zum einen eine in Seitenansicht trapezförmige Wartungsöffnung 16 im Gehäuse 10. Weiterhin unterscheidet sich das Siebrad 20 der Filtriervorrichtung 100 vom Stand der Technik dadurch, dass der im Filtrierbetrieb in der Wartungsöffnung 16 sichtbare Teil des Siebrads 20 als sogenanntes Sperrsegment 23 ausgebildet ist, das heißt, es gibt dort keine Siebkavitäten.

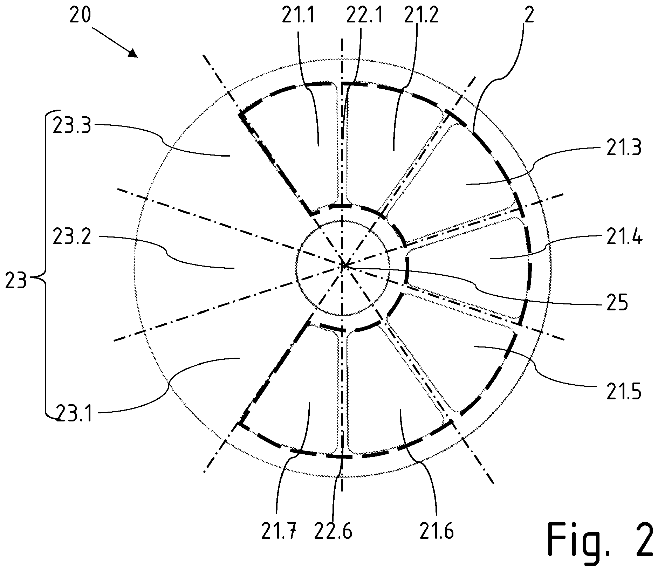

Das Siebrad 20 ist in Fig. 2 in Draufsicht gezeigt. Die Grundkonfiguration sieht vor, eine Kreisringzone um eine zentrale Nabe 25 herum in Anzahl n gleicher Kreisringsegmente zu teilen. In dem in Fig. 2 dargestellten Ausführungsbeispiel wurde n=10 gewählt, so dass jedes Segment einen Winkel von 36° einschließt. Drei Segmente 23.1, 23.2, 23.3 bilden zusammen das Sperrsegment 23. In allen anderen Kreisringsegmenten ist jeweils eine Siebkavität 21.1, ..., 21.7 ausgebildet, die jeweils eine Sieböffnung besitzt, die sich durch die gesamte Breite des Siebrads 20 hindurch erstreckt und die mit einem Siebelement abdeckbar ist. Alle Siebkavitäten 21.1, ..., 21.7 bilden gemeinsam eine als Ganzes durchströmbare Filtergruppe 2, doch ist jede Siebkavität 21.1, ..., 21.7 an ihrem Umfang über einen Dichtsteg begrenzt. Der Dichtsteg setzt sich für jede einzelne Siebkavität zusammen aus:
- einem inneren Bogenabschnitt, der sich um die Nabe 25 herum erstreckt,
- einem äußeren Bogenabschnitt am Außenrand des Siebrads 20; und
- wenigstens einem radialen Dichtsteg 22.1, ..., 22.6.

Benachbarte Siebkavitäten 21.1, ..., 21.7 haben einen gemeinsamen radialen Dichtsteg zwischen sich. Die randseitigen Siebkavitäten 21.1, 21.7 werden jeweils zu einer Seite hin durch radiale Kanten des Sperrsegments 23 begrenzt, die funktional im Sinne der Erfindung ebenfalls als Dichtsteg gelten.

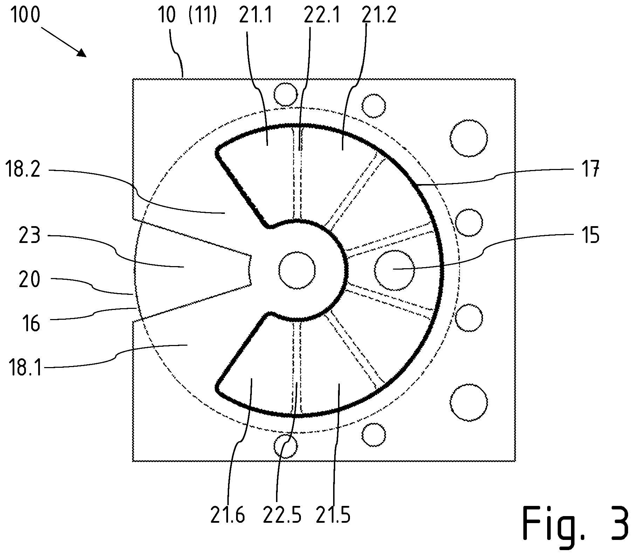

Fig. 3 zeigt eine Draufsicht auf das vordere Gehäuseelement 11 des Gehäuses 10, wobei zusätzlich das verdeckt dahinter liegende Siebrad 20 dargestellt ist. Das Siebrad 20 befindet sich in Figur 3 in der Produktionsstellung für den Filtrierbetrieb. Die Filtergruppe 2 des Siebrads 20 ist in Deckung mit dem Filtrierbereich 17 im Gehäuse 10. Hierbei handelt es sich um eine Ausnehmung an der jeweiligen zum Siebrad 20 weisenden Kontaktfläche der Gehäuseelemente, die mit dem Zulaufkanal 15 in Fließverbindung steht bzw. mit dem Ablaufkanal bei dem hinteren Gehäuseelement. Durch die Vertiefung im Filtrierbereich 17 werden die radialen Dichtstegabschnitte 22.1, ..., 22.6 zwischen den Siebkavitäten 21.1, ..., 21.7 überströmt, so dass alle Siebkavitäten 21.1, ..., 21.7 der Filtergruppe 2 zusammen von einem einzigen Zulaufkanal 15 angeströmt werden. Die Ablaufseite ist analog ausgebildet, um die Flüssigkeit wie insbesondere Kunststoffschmelze, die an verschiedenen Siebkavitäten 21.1, ..., 21.7 gefiltert wurde, wieder zu vereinigen und über einen Ablaufkanal aus dem Gehäuse 10 heraus zu führen.

Am Gehäuse 10 sind beidseits der Wartungsöffnung 16 Sperrbereiche 18.1, 18.2 ausgebildet. In diesen ist die zum Siebrad 20 weisende Oberfläche der Gehäuseelemente glatt und liegt nahezu direkt an den Dichtstegen an. Dadurch ist der seitliche Abfluss des Mediums über das Siebrad 20 ausgeschlossen. Zwar könnten, allein um die Sperrwirkung zu erzielen, die Sperrbereiche 18.1, 18.2 auch deutlich schmaler sein, jedoch sind sie in der beschriebenen Teilung des Siebrads 20 in n = 10 gleichmäßige Kreisringsegmente gehalten.

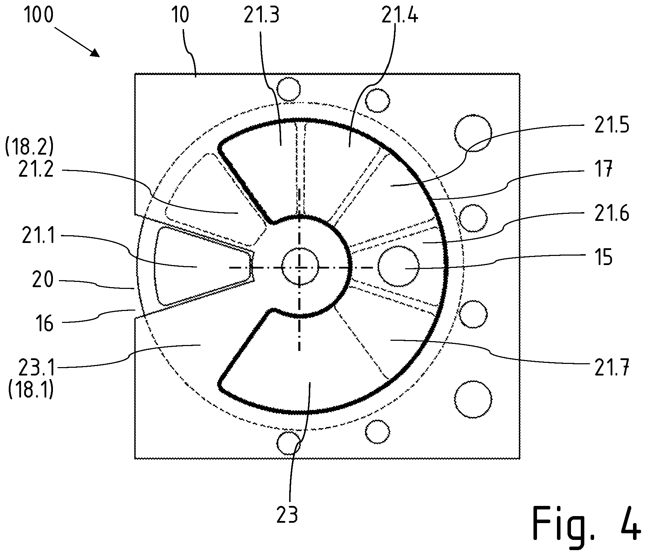

Der Vorteil dieser Teilung wird bei der nächsten Darstellung deutlich. In Figur 4 ist die Filtriervorrichtung 100 in einer Übergangsphase dargestellt. Das Siebrad 20 wurde im Vergleich zur Stellung nach Figur 3 um zwei Winkelschritte von je 36° gegen den Uhrzeigersinn gedreht. Dadurch liegen nun Teile des Sperrsegments 23 des Siebrads 20 innerhalb des Filtrierbereichs 17. In diesem verbleiben die Siebkavitäten 21.3, ..., 21.7 als nutzbare Filterflächen. Der Filtrierbetrieb kann also über die fünf verbleibenden Siebkavitäten 21.3, ..., 21.7 fortgesetzt werden.

Die Siebkavität 21.1 ist durch die Drehung im Bereich der Wartungsöffnung 16 platziert, so dass dort das Siebelement gewechselt oder gereinigt werden kann. Die Trapezform der Wartungsöffnung 16 ist notwendig, um sowenig Platz wie möglich zu verschenken und die gesamte benachbarte Fläche im Gehäuse 10 entsprechend einem Kreisringsegment als Sperrbereich 18.1 18.2 zur Verfügung zu haben. Die Fläche im Sperrbereich 18.1, 18.2 ist also mindestens so groß wie der Umfang der Dichtstege, die die Siebkavität 21.2 umschließen, so dass die Siebkavitäten samt Dichtstegen beidseits der Siebradplatte vollflächig überdeckt sind. Durch die Überdeckung wird genau die eine Siebkavität 21.2 abgedichtet. Obwohl die Siebkavität 21.2 konstruktiv Teil der gemeinsam nutzbaren Filtergruppe 2 ist, ist sie in dieser Stellung vollkommen abgesperrt und funktional von der Filtergruppe 2 getrennt.

Zur weiteren Wartung wird das Siebrad 20 immer um einen Winkelschritt weitergedreht, so dass die Siebkavitäten 21.3, ..., 21.7 nach und nach an der Wartungsöffnung 16 erscheinen. Währenddessen bewegt sich das Sperrsegment 23 einmal vollständig durch den Filtrierbereich 17 hindurch.

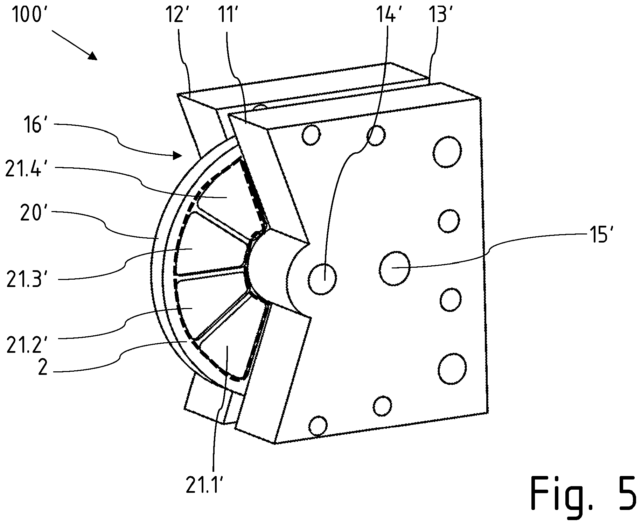

Figur 5 zeigt eine Filtriervorrichtung 100' gemäß einer zweiten Ausführungsform der Erfindung in perspektivischer Ansicht. Der Grundaufbau ist wie bei der ersten Ausführungsform auch und umfasst:
- Ein Gehäuse 10` mit einem plattenförmigen vorderen Gehäuseelement 11', durch das ein Zulaufkanal 15' führt, und mit einem ebenfalls plattenförmigen hinteren Gehäuseelement 12', durch welches ein Ablaufkanal führt.
- Ein Siebrad 20', das in einem Spalt 13' zwischen den planparallel angeordneten Gehäuseelementen 11', 12' angeordnet ist und um eine Drehachse 14` drehbar ist.

Charakteristisch für die Erfindung ist bei der Filtriervorrichtung 100' gemäß Figur 5 die in Seitenansicht diaboloförmige Wartungsöffnung 16' an der linken Seite des Gehäuses 10'. Der im Filtrierbetrieb in der Wartungsöffnung 16' sichtbare Teil des Siebrads 20` enthält eine komplette Filtergruppe 2, die vier einzelne und getrennt absperrbare, aber auch gemeinsam nutzbare Siebkavitäten 21.1', ..., 21.4` umfasst, die in der Wartungsöffnung 16' alle gleichzeitig offen zugänglich sind.

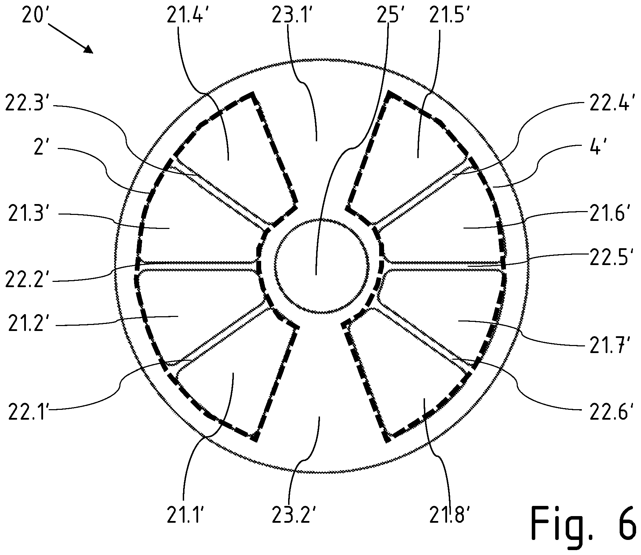

Das Siebrad 20' ist in Fig. 6 in Draufsicht gezeigt. Die Grundkonfiguration sieht wiederum vor, eine Kreisringzone um eine zentrale Nabe 25' herum in n gleich große Kreisringsegmente zu teilen. Bei dem dargestellten Ausführungsbeispiel wurde n=10 gewählt, so dass jedes Segment einen Winkel von 36° einschließt.

Zwei Segmente an diametral gegenüberliegenden Positionen bei 0 Uhr und 6 Uhr bilden jeweils ein Sperrsegment 23.1', 23.2`. Die Sperrsegmente 23.1', 23.2` teilen das Siebrad 20' in zwei Filtergruppen 2', 4' mit je vier Siebkavitäten 21.1', ..., 21.4', 21.5', ..., 21.8'. Diese besitzen jeweils eine Sieböffnung, die sich durch die gesamte Breite des Siebrads 20` hindurch erstreckt und die mit einem einsetzbaren Filter- oder Siebelement abdeckbar ist.

Die nebeneinander liegenden Siebkavitäten 21.1', ..., 21.4' bzw. 21.5', ..., 21.8'. bilden jeweils eine als Ganzes durchströmbare Filtergruppe 2' bzw. 4', doch ist jede Siebkavität 21.1', ..., 21.8' einzeln an ihrem Umfang begrenzt. Die Begrenzung setzt sich zusammen aus einem inneren Bogenabschnitt, einem äußeren Bogenabschnitt und zwei radialen Dichtstegen 22.1', ..., 22.6. Benachbarte Siebkavitäten 21.1', ..., 21.4' bzw. 21.5', ..., 21.8'. haben einen gemeinsamen radialen Dichtsteg zwischen sich. Randseitige Siebkavitäten 21.1', 21.4' bzw. 21.5', 21.8'. werden nach außen hin zudem durch radiale Kanten des jeweils benachbarten Sperrsegments 23.1', 23.2' begrenzt.

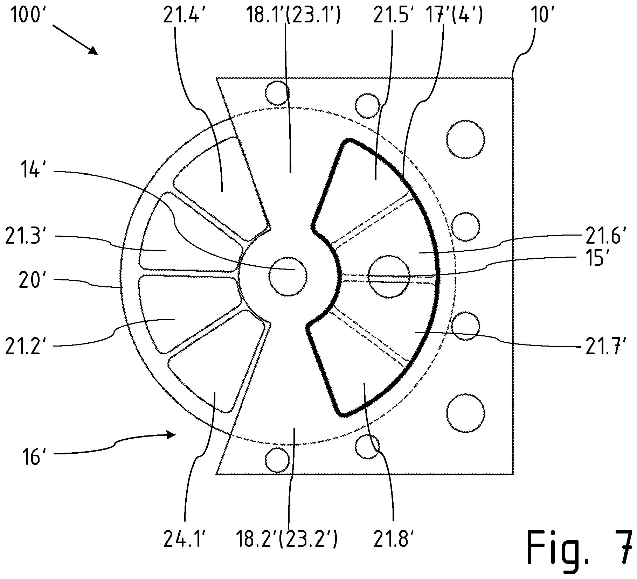

In Figur 7 ist das Siebrad 20' innerhalb des Gehäuses 10' in seitlicher Ansicht dargestellt, und zwar beim Filtrierbetrieb der Filtriervorrichtung 100'. Die linke Filtergruppe 2' mit den vier Siebkavitäten 21.1' ... 21.4' liegt vollständig frei in der Wartungsöffnung 16'. Am Gehäuseaußenrand sind jeweils oberhalb und unterhalb der Drehachse 14' Sperrbereiche 18.1', 18.2' ausgebildet. In diesen liegen die Sperrsegmente 23.1', 23.2' des Siebrads 20' dichtend an. Hierdurch wiederum wird die andere Filtergruppe 4', die mit ihren Siebkavitäten 21.5' ... 21.8' vollständig innerhalb des Filtrierbereichs 17' im Gehäuse 10' liegt, seitlich abgedichtet. Die Siebkavitäten 21.5' ... 21.8' der Filtergruppe 4' werden gemeinsam, von dem Zulaufkanal 15' ausgehend, durchströmt.

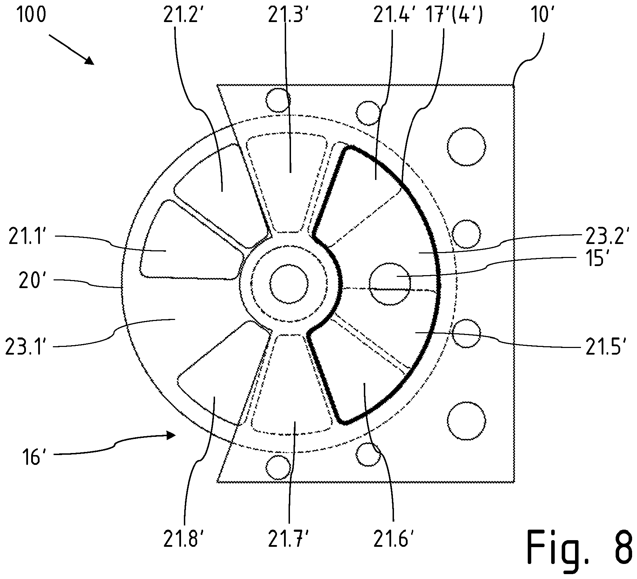

Für die in Figur 8 gezeigte Stellung des Siebrads 20' wurde im Vergleich zur Figur 7 eine Drehung um drei Segmentschritte vorgenommen. Zwar könnte auch bei dieser Zwischenstellung bereits eine Wartung der innerhalb der Wartungsöffnung 16' positionierten Siebkavitäten 21.1', 21.2', 21.8' vorgenommen werden. Vorzugsweise wird das Siebrad 20' aber immer um jeweils 180° gedreht, so dass die Lage der Filtergruppen 2', 4' vertauscht wird und immer alle Siebkavitäten entweder im Filtrierbereich 17' oder in der Wartungsöffnung 16' positioniert sind. Die Position des Siebrads 20' nach Figur 8 stellt daher lediglich eine Durchlaufposition dar. Wesentlich für die Erfindung ist aber, dass im Filtrierbereich 17' in dieser und anderen Zwischenpositionen stets ein Durchfluss durch mehrere Siebkavitäten möglich bleibt. Maximal eines der beiden Sperrsegmente 23.1, 23.2 kann in den Filtrierbereich gelangen, so dass in allen Siebradstellungen 3 von 4 Siebkavitäten durchströmbar bleiben und somit immer - bezogen auf die hier für das Ausführungsbeispiel gewählte Segmentierung - mindestens 75% der Fläche im Filtrierbereich 17' zur Verfügung steht.

## Patentansprüche

1. Filtriervorrichtung (100; 100') für hochviskose Medien, mit wenigstens:
- einem Gehäuse (10; 10') mit einem vorderen Gehäuseelement (11; 11') mit wenigstens einem Zulaufkanal (15; 15'), und mit einem hinteren Gehäuseelement (12; 12') mit wenigstens einem Ablaufkanal,
- einem zwischen den Gehäuseelementen (11, 12; 11', 12') drehbar gelagerten Siebrad (20; 20'), das eine Anzahl n von Siebkavitäten (21.1,...,21.7; 21.1' ... 21.8') besitzt, die jeweils mit wenigstens einem Siebeinsatzelement zu versehen sind und die zur Abdichtung gegenüber den Gehäuseelementen (11, 12; 11', 12') jeweils von wenigstens einem Dichtungssteg umgeben sind;
- einem vom Gehäuse (10; 10') bedeckten Filtrierbereich (17; 17'), der mit dem Zulaufkanal (15; 15') und dem Ablaufkanal in Fließverbindung steht und in welchem wenigstens eine Siebkavität (21.1,...,21.7; 21.1' ... 21.8') durchströmbar ist,
- einem Wartungsbereich (16; 16'), in welchem wenigstens eine Siebkavität (21.1,...,21.7; 21.1',..., 21.8') offen außerhalb des Gehäuses (10; 10') liegt und/oder von einer Gehäuseaußenseite aus zugänglich ist;
- zwei Sperrbereichen (18.1, 18.2; 18.1', 18.2 ') im Gehäuse (10; 10') , die jeweils zwischen dem Filtrierbereich (17; 17') und dem Wartungsbereich (16; 16') ausgebildet sind und in welchen jeweils wenigstens eine Siebkavität (21.1,...,21.7; 21.1',..., 21.8') samt Dichtungssteg vollständig von dem vorderen und von dem hinteren Gehäuseelement (11, 12; 11', 12') überdeckbar ist und ohne Fließverbindung mit dem Zulaufkanal (15; 15') und dem Ablaufkanal ist,
**dadurch gekennzeichnet,**
- **dass** auf dem Siebrad (20; 20') mehrere nebeneinanderliegende Siebkavitäten (21.1,...,21.7; 21.1', ... , 21.8'), zu wenigstens einer Filtergruppe (2; 2', 4') zusammengefasst sind, welche bei wenigstens teilweiser Überlappung mit dem Filtrierbereich (17; 17') des Gehäuses (10; 10') gemeinsam durchströmbar ist, wobei die vom Filtrierbereich (17; 17') des Gehäuses (10; 10') überdeckte Fläche auf dem Siebrad (20; 20') größer ist als eine Siebkavität (21.1,...,21.7; 21.1',... , 21.8');
- **dass** beidseits neben der Filtergruppe (2; 2', 4') jeweils wenigstens ein geschlossenes Sperrsegment (23; 23.1', 23.2') auf dem Siebrad (20; 20') vorgesehen ist, das bei Positionierung in den Sperrbereichen (18.1, 18.2; 18.1', 18.2') des Gehäuses (10; 10') zu beiden Seiten des Siebrads (20; 20') gegenüber den Gehäuseelementen (11, 12; 11', 12') abgedichtet ist, wobei die Sperrbereiche (18.1, 18.2; 18.1', 18.2) im Gehäuse (10; 10') jeweils größer sind als oder gleich groß sind wie eine Siebkavität (21.1,...,21.7; 21.1' ... 21.8') samt Dichtungssteg.

2. Filtriervorrichtung (100; 100') nach Anspruch 1, **dadurch gekennzeichnet, dass** die Gehäuseelemente (11, 12; 11', 12') im Filtrierbereich (17; 17') an ihren zum Siebrad (20; 20') weisenden Oberflächen jeweils eine flächige Vertiefung oder wenigstens einen Überströmkanal aufweisen.

3. Filtriervorrichtung (100; 100') nach einem der vorhergehenden Ansprüche, **dadurch gekennzeichnet, dass** die Sperrsegmente (23; 23.1', 23.2') eine kleinere Fläche auf dem Siebrad (20) einnehmen als die Filtergruppen (2; 2', 4'),

4. Filtriervorrichtung (100; 100') nach einem der vorhergehenden Ansprüche, **dadurch gekennzeichnet, dass** im Wartungsbereich eine Gehäuseöffnung (16; 16') vorgesehen ist, die jeweils größer ist als oder gleich groß ist wie eine Siebkavität (21.1,...,21.7; 21.1', ... , 21.8').

5. Filtriervorrichtung (100; 100') nach einem der vorhergehenden Ansprüche 1 bis 4, **dadurch gekennzeichnet, dass** die Siebeinsatzelemente in den Siebkavitäten (21.1,...,21.7; 21.1', ... , 21.8') und die zugehörigen Ausnehmungen in den Seitenflächen des Siebrads (20; 20') kreissegmentförmig sind.

6. Filtriervorrichtung (100; 100') nach Anspruch 5, **dadurch gekennzeichnet, dass** das Siebrad (20') in unterschiedlich große Kreisringsegmentflächen unterteilt ist, wobei die als Sperrsegment(e) (23; 23.1', 23.2') dienende(n) Kreisringsegmentfläche(n) größer ist (sind) als die Segmente in den Filtergruppen (2; 2', 4'), die Siebkavitäten (21.1,...,21.7; 21.1', ... , 21.8') aufweisen.

7. Filtriervorrichtung (100; 100') nach einem der Ansprüche 1 bis 4, **dadurch gekennzeichnet, dass** die Siebeinsatzelemente in den Siebkavitäten (21.1,...,21.7; 21.1', ... , 21.8') und die zugehörigen Ausnehmungen in den Seitenflächen des Siebrads (20; 20') rund sind.

8. Filtriervorrichtung (100) nach einem der Ansprüche 1 bis 6, **dadurch gekennzeichnet,**
- **dass** das Siebrad (20) in n Kreisringsegmentflächen (21.1, ..., 21.7) unterteilt ist, wobei n ≥ 6;
- **dass** 3 nebeneinanderliegende Kreisringsegmentflächen (23.1, 23.2, 23.3) ein gemeinsames Sperrsegment (23) bilden und (n-3) Kreisringsegmentflächen eine Filtergruppe (2) bilden.

9. Filtriervorrichtung (100) nach Anspruch 8, **dadurch gekennzeichnet, dass** im Wartungsbereich eine Gehäuseöffnung (16) vorgesehen ist, die die Größe einer Kreisringsegmentfläche (21.1, ..., 21.7, 23.1, 23.2, 23.3) hat.

10. Filtriervorrichtung (100) nach Anspruch 8 oder 9, **dadurch gekennzeichnet, dass** die Anzahl an Kreisringsegmentflächen (21.1, ..., 21.7, 23.1, 23.2, 23.3) n = 8 bis 12 beträgt.

11. Filtriervorrichtung (100') nach einem der Ansprüche 1 bis 6, **dadurch gekennzeichnet,**
- **dass** das Siebrad (20`) in n Kreisringsegmentflächen 21.1', ..., 21.8') unterteilt ist, wobei n ≥ 6;
- **dass** an diametral gegenüberliegenden Seiten des Siebrads (20`) je eine Filtergruppe (2', 4') ausgebildet ist, die jeweils wenigstens zwei nebeneinanderliegende Siebkavitäten (21.1', ..., 21.8') umfasst,
**dass** zwischen den Filtergruppen (2', 4') jeweils wenigstens eine Kreisringsegmentfläche als Sperrsegment (23.1', 23.2') ausgebildet ist; und dass im Wartungsbereich eine Gehäuseöffnung (16') vorgesehen ist, die jeweils größer ist als oder gleich groß ist wie eine Filtergruppe (2', 4').

12. Filtriervorrichtung (100') nach Anspruch 11, **dadurch gekennzeichnet, dass** in einer Arbeitsstellung für den Filtrierbetrieb alle mit Siebeinsatzelementen belegbaren Siebkavitäten (21.1', ..., 21.8') entweder in einer im Filtrierbereich (17') befindlichen Filtergruppe (2', 4') oder in einer im Wartungsbereich (16') befindlichen Filtergruppe (2', 4') angeordnet sind.

## Claims

1. Filtering device (100; 100') for highly viscous media, having at least:
- a housing (10; 10'), which has a front housing element (11; 11') with at least one inflow channel (15; 15') and has a rear housing element (12; 12') with at least one outflow channel,
- a screen wheel (20; 20'), which is mounted rotatably between the housing elements (11, 12; 11', 12') and has a number n of screen cavities (21.1, ..., 21.7; 21.1', ..., 21.8'), which are each to be provided with at least one screen insert element and, for sealing with respect to the housing elements (11, 12; 11', 12'), are each surrounded by at least one sealing web;
- a filtering region (17; 17'), which is covered by the housing (10; 10') and has a flow connection with the inflow channel (15; 15') and the outflow channel and in which at least one screen cavity (21.1, ..., 21.7; 21.1', ..., 21.8') can be flowed through,
- a maintenance region (16; 16'), in which at least one screen cavity (21.1, ..., 21.7; 21.1', ..., 21.8') is exposed outside the housing (10; 10') and/or is accessible from a housing outer side;
- two blocking regions (18.1, 18.2; 18.1', 18.2') in the housing (10; 10'), which are each formed between the filtering region (17; 17') and the maintenance region (16; 16') and in which in each case at least one screen cavity (21.1, ..., 21.7; 21.1', ..., 21.8'), together with sealing web, can be covered completely by the front and rear housing elements (11, 12; 11', 12') and has no flow connection with the inflow channel (15; 15') and the outflow channel,
**characterized**
- **in that**, on the screen wheel (20; 20'), multiple screen cavities (21.1, ..., 21.7; 21.1', ..., 21.8') situated one next to the other are combined to form at least one filter group (2; 2', 4'), which, in the case of at least partial overlapping with the filtering region (17; 17') of the housing (10; 10'), can be flowed through in a joint manner, wherein that area on the screen wheel (20; 20') which is covered by the filtering region (17; 17') of the housing (10; 10') is larger than a screen cavity (21.1, ..., 21.7; 21.1', ..., 21.8');
- and **in that**, on both sides, next to the filter group (2; 2', 4'), there is provided on the screen wheel (20; 20') in each case at least one closed blocking segment (23; 23.1', 23.2'), which, when positioned in the blocking regions (18.1, 18.2; 18.1', 18.2') of the housing (10; 10'), is sealed off with respect to the housing elements (11, 12; 11', 12') on both sides of the screen wheel (20; 20'), wherein the blocking regions (18.1, 18.2; 18.1', 18.2') in the housing (10; 10') are in each case larger than or equal in size to a screen cavity (21.1, ..., 21.7; 21.1' ..., 21.8'), together with sealing web.

2. Filtering device (100; 100') according to Claim 1, **characterized in that** the housing elements (11, 12; 11', 12'), in the filtering region (17; 17'), have on their surfaces facing toward the screen wheel (20; 20') in each case one planar depression or at least one overflow channel.

3. Filtering device (100; 100') according to either of the preceding claims, **characterized in that** the blocking segments (23; 23.1', 23.2') take up a smaller area on the screen wheel (20) than the filter groups (2; 2', 4').

4. Filtering device (100; 100') according to one of the preceding claims, **characterized in that**, in the maintenance region, there is provided a housing opening (16; 16') which is in each case larger than or equal in size to a screen cavity (21.1, ..., 21.7; 21.1', ..., 21.8').

5. Filtering device (100; 100') according to one of preceding Claims 1 to 4, **characterized in that** the screen insert elements in the screen cavities (21.1, ..., 21.7; 21.1', ..., 21.8') and the associated recesses in the side surfaces of the screen wheel (20; 20') are circular segment-like.

6. Filtering device (100; 100') according to Claim 5, **characterized in that** the screen wheel (20') is subdivided into circular ring segment surfaces of differing size, wherein the circular ring segment surface(s) serving as blocking segment(s) (23; 23.1', 23.2') is (are) larger than the segments in the filter groups (2; 2', 4'), which have segment cavities (21.1, ..., 21.7; 21.1', ..., 21.8').

7. Filtering device (100; 100') according to one of Claims 1 to 4, **characterized in that** the screen insert elements in the screen cavities (21.1, ..., 21.7; 21.1', ..., 21.8') and the associated recesses in the side surfaces of the screen wheel (20; 20') are round.

8. Filtering device (100) according to one of Claims 1 to 6, **characterized**
- **in that** the screen wheel (20) is subdivided into n circular ring segment surfaces (21.1, ..., 21.7), where n ≥ 6;
- **in that** 3 circular ring segment surfaces (23.1, 23.2, 23.3) situated one next to the other form a common blocking segment (23), and (n-3) circular ring segment surfaces form a filter group (2).

9. Filtering device (100) according to Claim 8, **characterized in that** a housing opening (16) which has the size of a circular ring segment surface (21.1, ..., 21.7, 23.1, 23.2, 23.3) is provided in the maintenance region.

10. Filtering device (100) according to Claim 8 or 9, **characterized in that** the number of circular ring segment surfaces (21.1, ..., 21.7, 23.1, 23.2, 23.3) is n=8 to 12.

11. Filtering device (100') according to one of claims 1 to 6, **characterized**
- **in that** the screen wheel (20') is subdivided into n circular ring segment surfaces (21.1', ..., 21.8'), where n ≥ 6;
- **in that**, on diametrically opposite sides of the screen wheel (20'), there is formed in each case one filter group (2', 4') which comprises in each case at least two screen cavities (21.1', ..., 21.8') situated one next to the other;
- **in that**, between the filter groups (2', 4'), in each case at least one circular ring segment surface is formed as a blocking segment (23.1', 23.2'); and in that a housing opening (16') which is in each case larger than or equal in size to a filter group (2', 4') is provided in the maintenance region.

12. Filtering device (100) according to Claim 11, **characterized in that**, in a working position for the filtering operation, all the screen cavities (21.1', ..., 21.8'), which can be occupied by screen insert elements, are arranged either in a filter group (2', 4') situated in the filtering region (17') or in a filter group (2', 4') situated in the maintenance region (16').

## Revendications

1. Dispositif de filtration (100 ; 100') pour milieux hautement visqueux, avec au moins :
- un boîtier (10 ; 10') avec un élément de boîtier avant (11 ; 11') avec au moins un canal d'arrivée (15 ; 15'), et avec un élément de boîtier arrière (12 ; 12') avec au moins un canal d'évacuation,
- une roue de tamisage (20 ; 20') montée de manière rotative entre les éléments de boîtier (11, 12 ; 11', 12'), qui possède un nombre n de cavités de tamisage (21.1, ..., 21.7 ; 21.1', ..., 21.8'), qui doivent respectivement être munies d'au moins un élément d'insert de tamisage et qui sont respectivement entourées d'au moins une nervure d'étanchéité pour assurer l'étanchéité par rapport aux éléments de boîtier (11, 12 ; 11', 12') ;
- une zone de filtration (17 ; 17') couverte par le boîtier (10 ; 10'), qui est en communication fluidique avec le canal d'arrivée (15 ; 15') et le canal d'évacuation et dans laquelle au moins une cavité de tamisage (21.1, ..., 21.7 ; 21.1', ..., 21.8') peut être traversée,
- une zone d'entretien (16 ; 16'), dans laquelle au moins une cavité de tamisage (21.1, ..., 21.7 ; 21.1', ..., 21.8') est ouverte à l'extérieur du boîtier (10 ; 10') et/ou est accessible depuis un côté extérieur du boîtier ;
- deux zones de blocage (18.1, 18.2 ; 18.1', 18.2'). 2') dans le boîtier (10 ; 10'), qui sont réalisées respectivement entre la zone de filtration (17 ; 17') et la zone d'entretien (16 ; 16') et dans lesquelles respectivement au moins une cavité de tamisage (21.1, ..., 21.7 ; 21.1', ..., 21.8'), y compris la nervure d'étanchéité, peut être entièrement recouverte par les éléments de boîtier avant et arrière (11, 12 ; 11', 12') et n'est pas en communication fluidique avec le canal d'arrivée (15 ; 15') et le canal d'évacuation,
**caractérisé en ce que**
- sur la roue de tamisage (20 ; 20'), plusieurs cavités de tamisage (21.1, ..., 21.7 ; 21.1', ..., 21.8') sont réunies en au moins un groupe de filtres (2 ; 2', 4') qui peut être traversé en commun en cas de chevauchement au moins partiel avec la zone de filtration (17 ; 17') du boîtier (10 ; 10'), la surface recouverte par la zone de filtration (17 ; 17') du boîtier (10 ; 10') sur la roue de tamisage (20 ; 20') étant plus grande qu'une cavité de tamisage (21.1, ..., 21.7 ; 21.1', ..., 21.8') ;
- des deux côtés du groupe de filtres (2 ; 2', 4'), au moins un segment de blocage fermé (23 ; 23.1', 23.2') est respectivement prévu sur la roue de tamisage (20 ; 20'), qui, lorsqu'il est positionné dans les zones de blocage (18.1, 18.2 ; 18.1', 18.2') du boîtier (10 ; 10'), est étanchéifié des deux côtés de la roue de tamisage (20 ; 20') par rapport aux éléments de boîtier (11, 12 ; 11', 12'), les zones de blocage (18.1, 18.2 ; 18.1', 18.2') dans le boîtier (10 ; 10') étant respectivement plus grandes ou aussi grandes qu'une cavité de tamisage (21.1, ..., 21.7 ; 21.1', ..., 21.8') y compris la nervure d'étanchéité.

2. Dispositif de filtration (100 ; 100') selon la revendication 1, **caractérisé en ce que** les éléments de boîtier (11, 12 ; 11', 12') dans la zone de filtration (17 ; 17') présentent chacun un creux plat ou au moins un canal de débordement sur leurs surfaces orientées vers la roue de tamisage (20 ; 20').

3. Dispositif de filtration (100 ; 100') selon l'une quelconque des revendications précédentes, **caractérisé en ce que** les segments de blocage (23 ; 23.1', 23.2') occupent une surface plus petite sur la roue de tamisage (20) que les groupes de filtres (2 ; 2', 4').

4. Dispositif de filtration (100 ; 100') selon l'une quelconque des revendications précédentes, **caractérisé en ce que** dans la zone d'entretien est prévue une ouverture de boîtier (16 ; 16') qui est respectivement plus grande ou aussi grande qu'une cavité de tamisage (21.1, ..., 21.7 ; 21.1', ..., 21.8').

5. Dispositif de filtration (100 ; 100') selon l'une quelconque des revendications 1 à 4 précédentes, **caractérisé en ce que** les éléments d'insert de tamisage dans les cavités de tamisage (21.1, ..., 21.7 ; 21.1', ..., 21.8') et les évidements correspondants dans les surfaces latérales de la roue de tamisage (20 ; 20') sont en forme de segment de cercle.

6. Dispositif de filtration (100 ; 100') selon la revendication 5, **caractérisé en ce que** la roue de tamisage (20') est divisée en surfaces de segment d'anneau de cercle de tailles différentes, la ou les surfaces de segment d'anneau de cercle servant de segment(s) de blocage (23 ; 23.1', 23.2') étant plus grande(s) que les segments dans les groupes de filtres (2 ; 2', 4') qui présentent des cavités de tamisage (21.1, ..., 21.7 ; 21.1', ..., 21.8').

7. Dispositif de filtration (100 ; 100') selon l'une quelconque des revendications 1 à 4, **caractérisé en ce que** les éléments d'insert de tamisage dans les cavités de tamisage (21.1, ..., 21.7 ; 21.1', ..., 21.8') et les évidements correspondants dans les surfaces latérales de la roue de tamisage (20 ; 20') sont ronds.

8. Dispositif de filtration (100) selon l'une quelconque des revendications 1 à 6, **caractérisé en ce que**
- la roue de tamisage (20) est divisée en n surfaces de segment d'anneau de cercle (21.1, ..., 21.7), avec n ≥ 6 ;
- 3 surfaces de segment d'anneau de cercle (23.1, 23.2, 23.3) juxtaposées forment un segment de blocage commun (23) et (n-3) surfaces de segment d'anneau de cercle forment un groupe de filtres (2).

9. Dispositif de filtration (100) selon la revendication 8, **caractérisé en ce qu'**il est prévu dans la zone d'entretien une ouverture de boîtier (16) qui a la taille d'une surface de segment d'anneau de cercle (21.1, ..., 21.7, 23.1, 23.2, 23.3).

10. Dispositif de filtration (100) selon la revendication 8 ou 9, **caractérisé en ce que** le nombre de surfaces de segment d'anneau de cercle (21.1, ..., 21.7, 23.1, 23.2, 23.3) est de n = 8 à 12.

11. Dispositif de filtration (100') selon l'une quelconque des revendications 1 à 6, **caractérisé en ce que**
- la roue de tamisage (20') est divisée en n surfaces de segment d'anneau de cercle (21.1', ..., 21.8'), avec n ≥ 6 ;
- un groupe de filtres (2', 4') est réalisé sur chacun des côtés diamétralement opposés de la roue de tamisage (20'), qui comprennent chacun au moins deux cavités de tamisage (21.1', ..., 21.8') juxtaposées,
- entre les groupes de filtres (2', 4') est réalisée respectivement au moins une surface de segment d'anneau de cercle en tant que segment de blocage (23.1', 23.2') ; et
- dans la zone d'entretien est prévue une ouverture de boîtier (16'), qui est respectivement plus grande ou aussi grande qu'un groupe de filtres (2', 4').

12. Dispositif de filtration (100') selon la revendication 11, **caractérisé en ce que**, dans une position de travail pour l'opération de filtration, toutes les cavités de tamisage (21.1', ..., 21.8') pouvant être garnies d'éléments d'insert de tamisage sont agencées soit dans un groupe de filtres (2', 4') se trouvant dans la zone de filtration (17'), soit dans un groupe de filtres (2', 4') se trouvant dans la zone d'entretien (16').
